# EUROPÄISCHE PATENTANMELDUNG

(11) **EP 0 563 525 A2**
(43) Veröffentlichungstag der Anmeldung: **06.10.1993**
(21) Anmeldenummer: 93101270.2
(22) Anmeldetag: 28.01.1993
(51) Int. Cl.: H04M 11/04

(54) **Verfahren und Einrichtung zum Aufbau und Abbau einer Verbindung in einem Hilferufsystem**

(30) Priorität: 29.02.1992 DE 4206426
(71) Anmelder: Neumann Elektronik GmbH, D-45414 Mülheim (DE)
(72) Erfinder: Neumann, Dirk, W-4330 Mülheim/Ruhr 1 (DE)
(74) Vertreter: Feder, Wolf-Dietrich, Dr. Dipl.-Phys.

(57) **Zusammenfassung**

Ein Verfahren zum Aufbau und Abbau einer Verbindung in einem Hilferufsystem sowie eine Einrichtung zur Durchführung des Verfahrens. Eine Notrufsprechstelle (NSS) ist über ein Sprechstelleninterface (SI), das öffentliche Fernsprechnetz und ein Abfrageinterface (AI) mit einer Abfragestelle (AS) verbindbar. Der Aufbau und der Abbau einer Verbindung wird vom Sprechstelleninterface (SI) und vom Abfrageinterface (AI) aus gesteuert. Das Sprechstelleninterface gibt Wahlsignale und auf Anforderung vom Abfrageinterface aus Kennungssignale ab. Nach dem Schließen der Schleife am Abfrageinterface gibt dieses ein Gesprächseröffnungssignal an das Sprechstelleninterface. Der Sprechweg wird durchgeschaltet und es werden im Abfrageinterface und im Sprechstelleninterface Zeitglieder zur Begrenzung der Gesprächszeit gesetzt. Das Zeitglied im Abfrageinterface wird, solange dort die Schleife geschlossen ist, laufend rückgesetzt und es wird dem Sprechstelleninterface ein NF-Rücksetzsignal zugeleitet, durch welches das Zeitglied im Sprechstelleninterface ebenfalls rückgesetzt wird. Nach Auslösung der Schleife an der Abfragestelle wird dem Sprechstelleninterface ein NF-Auslösesignal zugeführt, durch welches die Schleife dort ausgelöst und die Notrufsprechstelle in den Ruhezustand zurückgeschaltet wird.

## Beschreibung

Die Erfindung betrifft ein Verfahren zum Aufbau und Abbau einer Verbindung in einem Hilferufsystem, bei dem eine als Freisprecheinrichtung ausgebildete Notrufsprechstelle über das öffentliche Fernsprechnetz mit einer Abfragestelle verbindbar ist, wobei der Notrufsprechstelle der zum Betrieb der Hör-, Sprech- und Steuervorrichtungen erforderliche Gleichstrom über die Signalleitung zugeführt wird und die Notrufsprechstelle mittels einer Ruftaste aus einem Ruhezustand, in dem ein konstanter Gleichstrom vorgegebener Größe über die Signalleitung fließt, in einen Betriebszustand mit höherem Stromfluß schaltbar ist und durch Unterbrechung der Speisespannung auf der Signalleitung in den Ruhezustand zurückschaltbar ist sowie eine Einrichtung zur Durchführung des Verfahrens.

Notrufsprechstellen mit den obenerwähnten Merkmalen sind an sich bekannt und beispielsweise in EP- 0 078 862 B1 und DE- 40 18 544 A1 beschrieben. Es ist bekannt, derartige Notrufsprechstellen über Vermittlungsstellen der Deutschen Bundespost mit einer Abfragestelle zu verbinden. Hierbei ist der Notrufsprechstelle in der Vermittlungsstelle eine besondere Teilnehmerschaltung zugeordnet und die Verbindung zur Abfragestelle erfolgt über ein eigenes Notrufnetz. Bei Beendigung eines Gesprächs von der Abfragestelle aus wird in der Teilnehmerschaltung das Auslösen der Verbindung erkannt und durch eine kurzzeitige Schleifenunterbrechung erreicht, daß sich die Notrufsprechstelle in den Ruhezustand zurückschaltet.

Der Erfindung liegt die Aufgabe zugrunde, ein Verfahren und eine Einrichtung mit den obengenannten Merkmalen so auszugestalten, daß die Verbindung zwischen Notrufsprechstelle und Abfragestelle über das normale Wählnetz erfolgen kann und dennoch ein sicheres Auslösen der Schleife an der Notrufsprechstelle bei Beendigung des Gesprächs von der Abfragestelle aus erreicht wird. Dies ist von besonderer Bedeutung, wenn die Notrufsprechstelle über einen normalen Telefonanschluß an die Fernsprechleitung angeschlossen ist, weil in diesem Fall bei einem Nichtauslösen der Schleife bei Gesprächsende der Gebührenzähler weiterlaufen würde. Weiterhin bestehen Vorschriften der Deutschen Bundespost, gemäß denen die Schleife innerhalb einer vorgegebenen relativ kurz bemessenen Zeit (100 Sekunden) nach Gesprächsende ausgelöst sein muß.

Die Lösung dieser Aufgabe erfolgt mit einem Verfahren, das die Merkmale aus dem kennzeichnenden Teil des Patentanspruchs 1 aufweist. Die erfindungsgemäße Einrichtung zur Durchführung des Verfahrens ist durch die kennzeichnenden Merkmale des Patentanspruchs 2 bestimmt. Vorteilhafte Weiterbildungen der erfindungsgemäßen Einrichtung sind in den Ansprüchen 3 bis 16 beschrieben.

Das erfindungsgemäße Verfahren und die erfindungsgemäße Einrichtung eröffnen neue Möglichkeiten für den Einsatz von Hilferufsystemen.

So kann beispielsweise eine Notrufsprechstelle außen an einer Polizeidienststelle angeordnet sein, die nur zeitweise besetzt ist. Sie ist an den Teilnehmeranschluß dieser Polizeidienststelle angeschlossen und während der Zeiten, in denen die Polizeidienststelle nicht besetzt ist, wird ein die Notrufsprechstelle betätigender Hilfesuchender über das Wählnetz mit einer Abfragestelle verbunden, die in einer ständig besetzten Polizeidienststelle oder einer zentralen Erfassungsstelle installiert ist.

Auch private Anwendungsmöglichkeiten sind denkbar. So können beispielsweise bei größeren Industriebetrieben, bei denen des öfteren kleinere Zweigwerke in anderen Stadtteilen untergebracht sind, außen an den Pforten der Zweigwerke Sprechstellen angeordnet sein, die der obenerwähnten Notrufsprechstelle entsprechen und diese Sprechstellen sind über das Wählnetz mit einer Abfragestelle in der Pforte des Hauptwerkes oder einer zentralen Erfassungsstelle verbunden. Außerhalb der Betriebszeit ist über diese Verbindung eine Kommunikation, beispielsweise zwischen einem verspäteten Anlieferer und dem Pförtner des Hauptwerkes, möglich.

Der Grundgedanke der Erfindung besteht darin, sowohl die Notrufsprechstelle als auch die Abfragestelle über ein eigenes Interface an die Fernsprechleitung anzuschließen. Die beiden Interfaces sind so ausgestattet, daß nicht nur der gesamte Aufbau und Wiederabbau der Verbindung mit den üblichen Wählvorgängen und dem Austausch von Kennungsanforderungs- bzw. Kennungssignalen von den Interfaces aus durchgeführt wird, sondern vor allem das Auslösen der Schleife an der Notrufsprechstelle geschieht über die beiden Interfaces. Hierzu ist in jedem Interface ein Zeitglied angeordnet. Beide Zeitglieder werden zu Beginn eines Gesprächs gesetzt und dann vom Abfrageinterface aus jeweils kurz vor ihrem Ablauf zurückgesetzt, solange das Gespräch andauert. Dies geschieht im Abfrageinterface direkt und im Sprechstelleninterface durch Niederfrequenz-Rücksetzsignale, die über die Fernsprechleitung dem Sprechstelleninterface zugeleitet werden. Bei Gesprächsende wird dann zusätzlich ein eigenes Niederfrequenz-Auslösesignal übermittelt, durch welches die Schleife im Sprechstelleninterface ausgelöst wird. Durch dieses System ist für das Auslösen der Schleife eine doppelte Sicherheit gegeben. Sollte nämlich das Niederfrequenz-Auslösesignal vom Sprechstelleninterface nicht erkannt werden, so erfolgt dennoch die Auslösung der Schleife spätestens nach Ablauf der am Zeitglied voreingestellten Zeit, wenn kein Niederfrequenz-Rücksetzsignal mehr eintrifft.

Wie weiter unten anhand eines Ausführungsbeispiels näher erläutert, kann das erfindungsgemäße Verfahren und insbesondere die erfindungsgemäße Einrichtung so ausgebildet sein, daß der Hilfesuchende von allen Schalt- und Steuervorgängen nichts merkt und insbesondere die Niederfrequenz-Rücksetzsignale nicht hört und somit nicht verunsichert wird.

Die erfindungsgemäße Einrichtung kann sowohl im Impulswahlverfahren als auch im Frequenzwahlverfahren betrieben werden.

Die erfindungsgemäße Einrichtung kann mit an sich bekannten Prüfverfahren sowohl vom Sprechstelleninterface aus als auch über das öffentliche Wählnetz von einem PC mit Wählmodem auf ihre Funktionsfähigkeit überprüft werden.

Im Folgenden wird anhand der beigefügten Zeichnungen ein Ausführungsbeispiel für eine Hilferufsystem zur Durchführung des erfindungsgemäßen Verfahrens und mit den Merkmalen der erfindungsgemäßen Einrichtung näher erläutert.

In den Zeichnungen zeigen:
- Fig. 1: in einem Übersichts-Blockschaltbild den Gesamtaufbau eines Hilferufsystems von der Notrufsprechstelle bis zur Abfragestelle;
- Fig. 2: in einem Blockschaltbild den Schaltungsaufbau im Sprechstelleninterface des Hilferufssystems nach Fig. 1;
- Fig. 3: in einem Blockschaltbild den Schaltungsaufbau im Abfrageinterface bei dem Hilferufsystem nach Fig. 1 und 2.

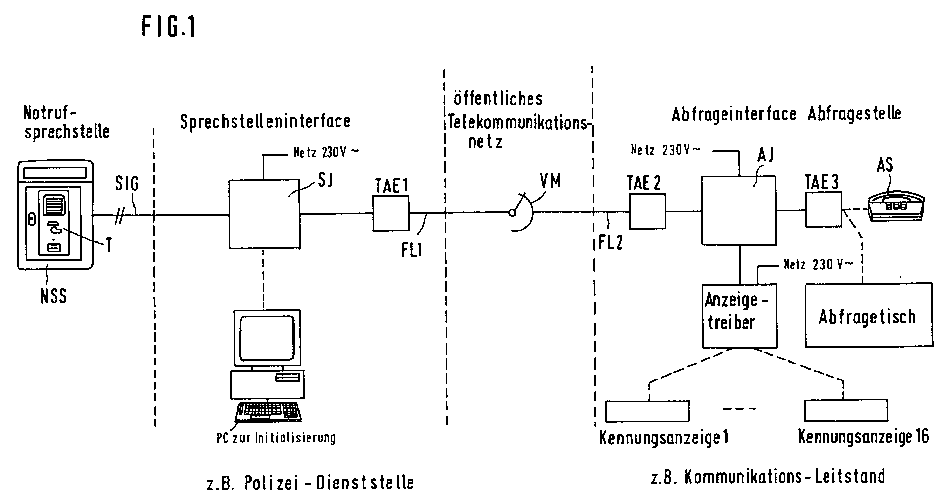

Fig. 1 zeigt den Gesamtaufbau eines Hilferufssystems. Eine Notrufsprechstelle NSS an sich bekannter Bauart, wie sie beispielsweise in EP - 0 078 862 oder DE 40 18 544 A1 beschrieben ist, ist über eine Signalleitung SIG mit einem Sprechstelleninterface SI verbunden. Die Notrufsprechstelle NSS kann dabei beispielsweise an der Außenseite einer Polizei-Dienststelle angeordnet sein, in der das Sprechstelleninterface SI über eine übliche Anschlußdose TAE1 an die Fernsprechleitung FL1 angeschlossen ist. Die Fernsprechleitung FL1 ist Teil des öffentlichen Telekommunikationsnetzes und ist mit der Fernsprechleitung FL2, die zur Abfragestelle führt, über ein oder mehrere Vermittlungsstellen VM verbindbar. Die als Abfragetelefon ausgebildete Abfragestelle AS befindet sich beispielsweise in einem Kommunikations-Leitstand und ist über eine Anschlußdose TAE3 mit einem Abfrageinterface AI verbunden, welches über eine Anschlußdose TAE2 an die Fernsprechleitung FL2 angeschlossen ist. Der Kommunikations-Leitstand enthält außer der Abfragestelle noch einen über eine Schnittstelle an das Abfrageinterface AI angeschlossenen Anzeigetreiber, der mit einer oder mehreren Kennungsanzeigen verbunden ist. Weiterhin kann der Kommunikations-Leitstand auch einen in der üblichen Weise ausgebildeten Abfragetisch enthalten, der zusätzlich mit einer oder mehreren Kennungsanzeigen ausgerüstet ist und im Folgenden nicht näher erläutert wird.

Der Hilferuf wird an der Notrufsprechstelle NSS vom Hilfesuchenden durch Betätigung einer Ruftaste T aktiviert. Die Notrufsprechstelle NSS wird sodann über das Sprechstelleninterface SI, die Vermittlungsstelle VM und das Abfrageinterface AI mit der Abfragestelle AS verbunden, so daß ein Gespräch zwischen Notrufsprechstelle und Abfragestelle möglich wird.

Die hierbei ablaufenden Vorgänge werden anhand des Aufbaus von Sprechstelleninterface und Abfrageinterface im Folgenden näher erläutert.

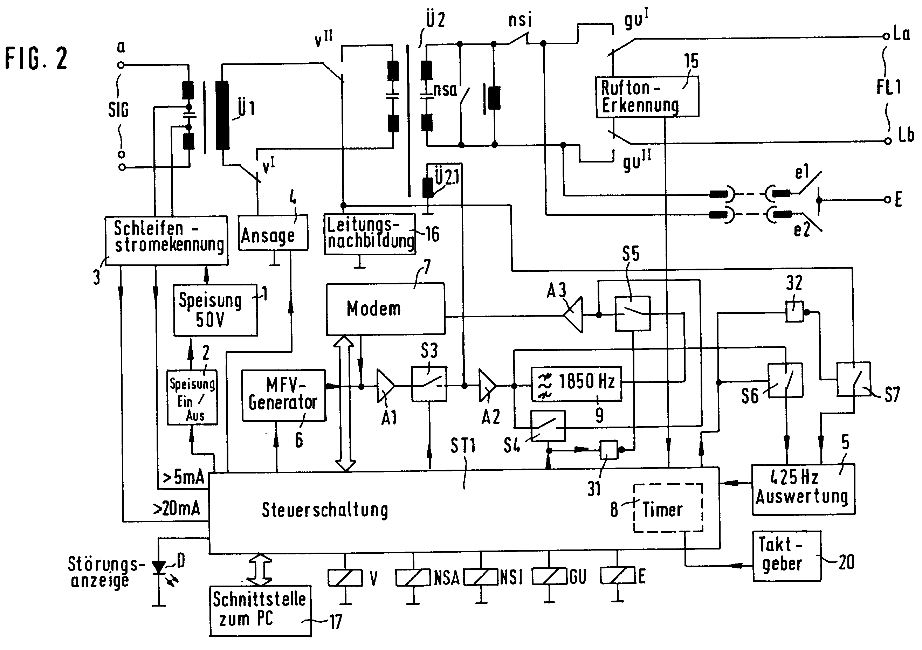

Fig. 2 zeigt den grundsätzlichen Aufbau des Sprechstelleninterface SI.

Dieses ist über die Anschlüsse a/b mit der zur Notrufsprechstelle NSS führenden Signalleitung SIG verbunden. Die Signalleitung SIG ist über einen ersten Übertrager Ü1, die Schaltkontakte vI und vII eines Relais V, einen zweiten Übertrager Ü2, einen nsi-Kontakt sowie Gabelumschaltkontakte guI und guII mit den Ausgangskontakten La/Lb der Fernsprechleitung FL1 verbindbar.

Alle Schaltvorgänge im Sprechstelleninterface werden von einer programmierbaren Steuerschaltung ST1 aus angesteuert.

Die Speisespannung wird der Notrufsprechstelle NSS über die Signalleitung SIG von einer Speisespannungsquelle 1 aus zugeführt, die über eine an die Steuerschaltung ST1 angeschlossene Schaltvorrichtung 2 ein- und ausschaltbar ist. Der über die Notrufsprechstelle NSS fließende Schleifenstrom wird in einer Schleifenstromerkennungsschaltung 3 erkannt. Im Ruhezustand der Notrufsprechstelle NSS fließt ein niedriger Schleifenstrom von etwa 5mA, der von der Steuerschaltung ST1 festgestellt wird. Nach dem Betätigen der Ruftaste T fließt ein höherer Schleifenstrom von etwa 20mA, was ebenfalls von der Steuerschaltung ST1 festgestellt wird.

Stellt die Steuerschaltung ST1 fest, daß der höhere Schleifenstrom fließt, so wird zunächst über eine Ansagevorrichtung 4 eine Ansage, beispielsweise "Bitte warten", an die Notrufsprechstelle NSS durchgegeben. Gleichzeitig werden über das Relais GU die Gabelumschaltkontakte guI und guII umgeschaltet. Der über die Fernsprechleitung FL1 eintreffende Wählton mit einer Frequenz von 425 Hz gelangt nunmehr über die zusätzliche Wicklung Ü2.1 des Übertragers Ü2, einen Verstärker A2 und einen Schalter S6 zur Schaltung 5 für die Erkennung des Wähltons. Wird der Wählton erkannt, so werden mit einer in der Steuerschaltung eingespeicherten Rufnummer Wahlsignale abgegeben. Dies kann entweder in Form einer Impulswahl über das Relais NSI und den nsi-Kontakt erfolgen, oder in Form einer Frequenzwahl vom MFV-Generator 6 aus über einen Verstärker A1, den Schalter S3 und die Wicklung Ü2.1 des Übertragers Ü2.

Nach Abgabe der Wahlsignale wird von der Schaltung 5 aus überprüft, ob der Freiton auf der Fernsprechleitung FL1 erkannt werden kann. Wenn dieser Freiton nicht erkannt wird, erfolgen eine vorgegebene Anzahl von weiteren Wahlversuchen. Bleibt die Wahl mit der vorgegebenen Rufnummer erfolglos, so erfolgt eine weitere Wahl mit einer weiteren eingespeicherten anderen Rufnummer und gegebenenfalls weiteren Wahlversuchen.

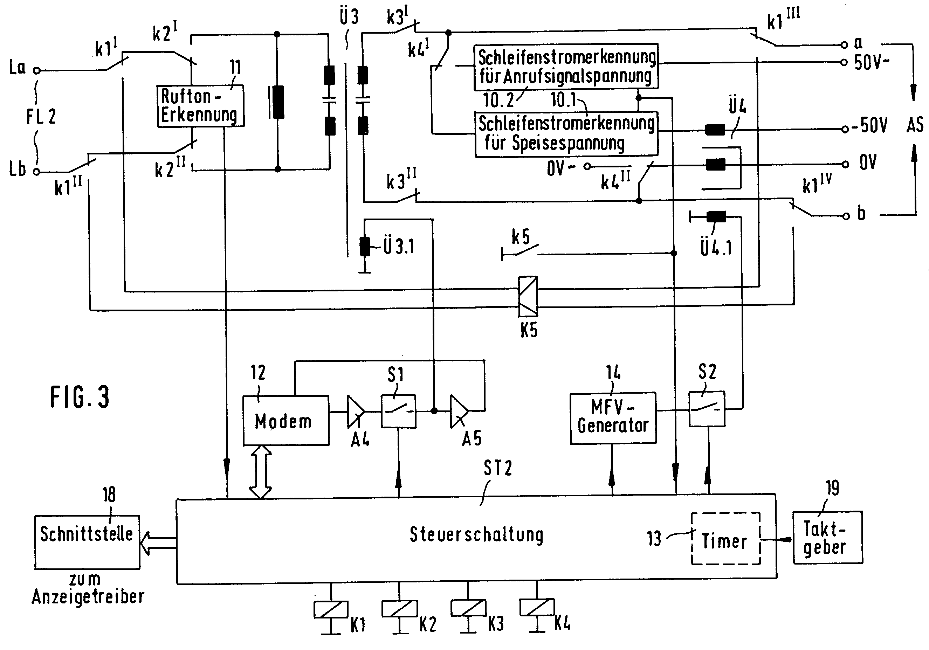

Das in Fig. 3 dargestellte Abfrageinterface AI enthält ebenfalls eine Steuerschaltung ST2, die sämtliche Einrichtungsteile des Abfrageinterfaces ansteuert.

Die Zweige La/Lb der Fernsprechleitung FL2 sind über Schaltkontakte k1I, k1II, k2I, k2II, einen Übertrager Ü3, Kontakte k3I, k3II und k1III, k1IV mit den Anschlüssen a/b der Abfragestelle AS verbindbar.

Die von dem Sprechstelleninterface SI abgegebenen Rufsignale werden im Abfrageinterface in einer Ruftonerkennungsschaltung 11 erkannt und es werden entsprechende Signale an die Steuerschaltung ST2 gegeben. Wird der Rufton erkannt, so erfolgt zunächst eine Abfrage der Standortkennung des Sprechstelleninterfaces und somit der Notrufsprechstelle vom Abfrageinterface aus. Hierzu werden zunächst über das Relais K2 die Kontakte k2I/k2II umgeschaltet und von einem Modem 12 aus Kennungsanforderungssignale über einen Verstärker A4, einen Schalter S1 und die Wicklung Ü3.1 des Übertragers Ü3 auf die Fernsprechleitung FL2 gegeben. Im Sprechstelleninterface werden die Kennungsanforderungssignale über die Wicklung Ü2.1, den Verstärker A2, den Schalter S4 und den Verstärker A3 dem Modem 7 zugeführt, dort erkannt und es werden Kennungssignale über den Verstärker A1, den Schalter S3 und die Wicklung Ü2.1 auf die Fernsprechleitung FL1 gegeben.

Falls erforderlich, erfolgt die Kennungsanforderung vom Abfrageinterface aus mehrfach. Wird nach Abgabe einer vorgegebenen Zahl von Kennungsanforderungssignalen keine Standortkennung erkannt, so geht die Steuerschaltung ST2 davon aus, daß der Ruf nicht von einer Notrufsprechstelle, sondern von einem normalen Telefonanschluß abgegeben wurde. Es wird dann das Relais K1 aktiviert. Die Kontakte k1I, k1II, k1III und k1IV überbrücken dann sofort die gesamte Schaltung im Abfrageinterface und verbinden die Abfragestelle AS direkt mit der Fernsprechleitung FL2. Es kann nun ein normales Telefongespräch durchgeführt werden.

Wird die Standortkennung erkannt, so erfolgen keine weiteren Anforderungsversuche und es wird von der Steuerschaltung ST2 das Relais K4 aktiviert. Über die Kontakte k4I und k4II war bisher die Abfragestelle AS an die Speisegleichspannung - 50V angeschlossen. Mit dem Umschalten der Kontakte k4I und k4II gelangen 50 V Wechselspannung als Rufspannung zur Abfragestelle AS. Dabei erzeugt die Steuerschaltung ST2 den Takt des Rufsignals, in dem das Relais K4 aktiviert wird. Sobald in der Abfragestelle AS der Hörer abgenommen wird schließt sich die Schleife und der fließende Schleifenstrom wird in den Schaltungen zur Schleifenstromerkennung 10.1 oder 10.2 erkannt und in der Steuerschaltung ST2 ausgewertet. Hierbei laufen während der Zuführung des Rufsignals folgende Vorgänge ab:
a) Während der Klingelpause:
   Die Schaltung 10.1 zur "Schleifenstromerkennung für Speisespannung" erkennt den Schleifenstrom und gibt ein Signal an die Steuerschaltung ST2. Die Steuerschaltung schaltet daraufhin über das Relais K4 den Anrufsignaltakt ab. Es fließt ein Gleichstrom als Schleifenstrom.
b) Während der Klingelphase:
   In diesem Zustand wird der in der Schleife fließende Wechselstrom von der Schaltung 10.2 zur "Schleifenstromerkennung für Anrufsignalspannung" erkannt und ebenfalls ein entsprechendes Steuersignal an die Steuerschaltung ST2 abgegeben. Die Steuerschaltung deaktiviert wiederum das Relais K4 und die Kontakte k4I und k4II verbleiben in der Stellung, in der ein Gleichstrom als Schleifenstrom fließt.

Nunmehr wird im Abfrageinterface AI das von einem Taktgeber 19 angesteuerte Zeitglied 13 gesetzt und somit ein Zeitraum von 100 s als Gesprächszeit vorgegeben. Gleichzeitig wird in der bereits beschriebenen Weise von Modem 12 aus ein Eröffnungssignal über die Fernsprechleitung FL2 dem Sprechstelleninterface SI zugeleitet. Dies wird im Modem 7 erkannt und es wird über die Steuerschaltung ST1 einerseits das von einem Taktgeber 20 aus angesteuerte Zeitglied 8 im Sprechstelleninterface gesetzt und andererseits durch Aktivierung des Relais V die Kontakte vI und vII umgeschaltet und damit der Sprechweg im Sprechstelleninterface freigeschaltet. Damit ist auch die Ansage für die Notrufsprechstelle abgeschaltet.

Das Zeitglied 8 im Sprechstelleninterface gibt ebenfalls eine Gesprächszeit von 100 s frei.

Beim Ablaufen eines der beiden Zeitglieder 8 oder 13 würde jeweils im Sprechstelleninterface oder im Abfrageinterface eine Zwangsauslösung der Schleife erfolgen. Zur automatischen Verlängerung der Gesprächszeit ist vorgesehen, daß im Abfrageinterface, solange der Schleifenschluß von der Schaltung 10.1 zur Schleifenstromerkennung erkannt wird, das Zeitglied 13 von der Steuerschaltung ST2 aus automatisch vor Ablauf zurückgesetzt wird.

Gleichzeitig mit dieser Rücksetzung des Zeitgliedes 13 wird der Schalter S1 im Abfrageinterface für eine vorgegebene Zeit (ca. 0,3s) durchgeschaltet. Hierdurch wird das Ruhesignal des Modems 12 mit einer Frequenz von 1850 Hz auf die Fernsprechleitung FL2 gegeben. Dieses NF-Rücksetzsignal wird im Sprechstelleninterface empfangen und über die Wicklung Ü2.1, den Verstärker A2, ein Bandpaßfilter 9, den Schalter S5 und den Verstärker A3 dem Modern 7 zugeführt und dort ausgewertet. Liegt das NF-Rücksetzsignal länger als 100 ms an, so wird das Zeitglied 8 von der Steuerschaltung ST1 rückgesetzt. Während des Empfangs und der Auswertung des NF-Rücksetzsignals wird die Notrufsprechstelle NSS über die Kontakte vI und vII für einen vorgegebenen Zeitraum (ca. 0,8s) von der Fernsprechleitung FL1 abgetrennt, so daß der Hilfesuchende den Ton des NF-Rücksetzsignales nicht hören kann und somit nicht verunsichert wird.

Im Abfrageinterface wird während der Zeit, in welcher die Notrufsprechstelle NSS abgetrennt ist, über das Relais K3 und die Relaiskontakte k3I und k3II ebenfalls die Abfragestelle AS von der Fernsprechleitung FL2 abgetrennt, so daß auch an der Abfragestelle der Ton des NF-Rücksetzsignales nicht direkt hörbar ist. Es wird aber während dieser Zeit vom MFV-Generator 14 über den Schalter S2 und die Wicklung Ü4.1 ein Mehrfrequenztonsignal zur Abfragestelle AS gegeben. Der Bedienstete an der Abfragestelle hört diesen Ton und weiß somit, daß eine kurzfristige Gesprächsunterbrechung stattgefunden hat.

Nach Beendigung des Gespräches wird an der Abfragestelle AS der Hörer aufgelegt und damit die Schleife im Abfrageinterface ausgelöst, was von der Schaltung 10.1 erkannt wird. Damit wird auch die Auslösung der Schleife im Sprechstelleninterface eingeleitet. Zu diesem Zweck wird der Schalter S1 im Abfrageinterface für ein vorgegebenes größeres Zeitintervall (ca. 8 s) durchgeschaltet und für die gleiche Zeit vom Modem 12 aus ein NF-Auslösesignal mit der Frequenz von 1850 Hz auf die Fernsprechleitung FL2 gegeben. Für die gleiche Zeit wird die Abfragestelle AS über die Kontakte k3I und k3II von der Fernsprechleitung FL2 abgetrennt, damit nicht etwa zusätzliche Störsignale vom Abfrageinterface aus auf die Fernsprechleitung FL2 gelangen können.

Im Sprechstelleninterface gelangt das NF-Auslösesignal über das Bandpaßfilter 9 und den Schalter S5 zum Modem 7. Wird das NF-Auslösesignal für einen vorgegebenen Zeitraum (ca. 3 s) erkannt, so erfolgt über die Steuerschaltung ST1 die Auslösung der Schleife. Der Auslöseton von 1850 Hz ist diesmal für die gleiche Zeit an der Notrufsprechstelle hörbar.

Zur Auslösung wird von der Steuerschaltung ST1 aus für einen vorgegebenen Zeitraum (ca. 3 s) über die Schaltung 2 die Speisespannung der Notrufsprechstelle NSS unterbrochen. Dies hat zur Folge, daß sich die Notrufsprechstelle NSS selbsttätig in den Ruhezustand schaltet. Gleichzeitig wird über die Kontakte vI und vII die Notrufsprechstelle von der Fernsprechleitung FL1 abgetrennt. Die Gabelumschaltkontakte guI und guII kehren ebenfalls in ihre Ruhelage zurück.

Wenn nach dem Auslösen der Schleife im Abfrageinterface das NF-Auslösesignal im Sprechstelleninterface nicht erkannt wird, beginnt der gleiche Auslösevorgang nach spätestens 100 s, da in diesem Fall auch keine NF-Rücksetzsignale mehr empfangen und erkannt werden können und somit das Zeitglied 8 nicht mehr zurückgesetzt wird.

Das Auslösen der Schleife im Sprechstelleninterface ist damit in doppelter Weise sichergestellt.

Wenn an der Abfragestelle AS der Hörer abgenommen wird, ohne daß ein Rufsignal vorliegt, wird nach Erkennung des Schleifenstroms durch die Schaltung 10.1 vom MFV-Generator 14 aus über den Schalter S2 und die Wicklung Ü4.1 eine MFV-Tonkombination an die Abfragestelle AS gegeben. Dies dient zur Signalisierung, daß der entsprechende Apparat nicht in gehender Richtung betrieben werden kann.

Der Übertrager Ü4 im Abfrageinterface dient außer zur Einspeisung der Signale vom MFV-Generator 14 auch als Speisedrossel für die Zuführung der Speisegleichspannung.

Im Sprechstelleninterface (Fig. 2) ist über die Inverter I1 und I2 dafür gesorgt, daß jeweils entweder der Schalter S4 oder der Schalter S5 bzw. entweder der Schalter S6 oder der Schalter S7 geschlossen sein kann.

Es ist möglich, die Notrufsprechstelle NSS vom Sprechstelleninterface aus einer Funktionsprüfung zu unterziehen. Diese Funktionsprüfung findet im Prinzip in der gleichen Weise statt wie dies beispielsweise in EP 0 078 862 B1 beschrieben ist. Die Prüffunktion wird vom Sprechstelleninterface aus gestartet, indem nach jedem Auslösen der Verbindung die Speisespannung erneut angelegt wird. Die Notrufsprechstelle NSS sendet dann für einen vorgegebenen Zeitraum (ca. 200 ms) einen Prüfton mit einer Frequenz von 425 Hz über die Kontakte vI und vII. Gleichzeitig wird die Schleife für einen vorgegebenen Zeitraum geschlossen. Die Steuerschaltung ST1 öffnet den Schalter S6 und schließt den Schalter S7. Über S7 gelangt der Prüfton zur Auswerteschaltung 5. Wird der Prüfton erkannt, so gibt die Auswerteschaltung 5 ein Quittungssignal an die Steuerschaltung ST1. Wird der Prüfton nicht erkannt, so schaltet bei Ausbleiben des Quittungssignals die Steuerschaltung die Störungsanzeige D ein. Die Störungsanzeige D bleibt solange eingeschaltet bis sie manuell wieder abgeschaltet wird.

Es ist weiterhin eine Überprüfung über das öffentliche Fernsprechnetz von einem PC mit Wählmodem aus möglich. Hierzu wird von der Vermittelungsstelle VM aus der Rufton auf die Fernsprechleitung FL1 gegeben, der im Sprechstelleninterface von der Ruftonerkennung 15 erkannt und ein entspreches Signal an die Steuerschaltung ST1 gegeben wird, durch welche dann ein Prüfvorgang ausgelöst wird.

Im von der Fernsprechleitung FL1 abgetrennten Zustand ist die Notrufsprechstelle NSS über die Kontakte vI und VII an eine Leitungsnachbildung 16 angeschlossen, wodurch sichergestellt ist, daß auch im Prüfzustand an der Notrufsprechstelle die gleichen Leitungsverhältnisse vorliegen wie im an die Fernsprechleitung angeschlossenen Zustand.

Wie aus Fig. 2 zu entnehmen, ist die Steuerschaltung ST1 im Sprechstelleninterface über eine Schnittstelle 17 an einen Programmierplatz anschließbar, beispielsweise einem PC. Über diese Schnittstelle können alle Initialisierungsdaten nebst Anschlußdaten, Rufnummerkennungen und Prüf- bzw. Steuerfunktionen ein- und ausgelesen werden.

Weiterhin ist die Steuerschaltung ST2 im Abfrageinterface über eine Schnittstelle 18 mit einem Anzeigetreiber verbindbar, der in Fig. 1 dargestellte Kennungsanzeigen ansteuert.

Das im Abfrageinterface angeordnete Relais K5 mit dem Schaltkontakt k5 dient zur Signalisierung eines Schleifenschlusses an die Steuerschaltung ST2 bei der Führung eines Gesprächs über die Überbrückungsschaltung. Das im Sprechstelleninterface angeordnete Relais E mit Schaltkontakten e1 und e2 dient zur Amtsholung, wenn das Sprechstelleninterface an eine Nebenstellenanlage angeschlossen ist.

## Patentansprüche

1. Verfahren zum Aufbau und Abbau einer Verbindung in einem Hilferufsystem, bei dem eine als Freisprecheinrichtung ausgebildete Notrufstelle über das öffentliche Fernsprechnetz mit einer Abfragestelle verbindbar ist, wobei der Notrufsprechstelle der zum Betrieb der Hör-, Sprech- und Steuervorrichtungen erforderliche Gleichstrom über die Signalleitung zugeführt wird und die Notrufsprechstelle mittels einer Ruftaste aus einem Ruhezustand, in dem ein konstanter Gleichstrom vorgegebener Größe über die Signalleitung fließt, in einen Betriebszustand mit höherem Gleichstromfluß schaltbar und durch eine Unterbrechung der Speisespannung auf der Signalleitung in den Ruhezustand zurückschaltbar ist, gekennzeichnet durch die automatische Abfolge folgender Verfahrensschritte:
A) Erkennung einer Erhöhung des Schleifenstroms an der Notrufsprechstelle;
B) Einschaltung einer Ansage an der Notrufsprechstelle;
C) Erkennung des von der Fernsprechleitung kommenden Wähltons und Abgabe von Wählsignalen auf die Fernsprechleitung an der Notrufsprechstelle;
D) Erkennung des Freitons an der Notrufsprechstelle;
E) Erkennung des Ruftons an der Abfragestelle;
F) Abfrage der Standortkennung von der Abfragestelle aus;
G) Erzeugung eines Rufsignals an der Abfragestelle;
H) Erkennung eines Schleifenstroms an der Abfragestelle;
I) Wiederholte Vorgabe einer Gesprächszeit an der Abfragestelle solange die Schleife dort geschlossen ist;
J) Absendung eines Gesprächseröffnungssignals von der Abfragestelle über die Fernsprechleitung;
K) Abschaltung der Ansage und Vorgabe einer rückstellbaren Gesprächszeit an der Notrufsprechstelle;
L) Durchschaltung des Sprechweges zwischen der Notrufstelle und der Abfragestelle;
M) Wiederholte Abgabe eines NF-Rücksetzsignals von der Abfragestelle zur Notrufsprechstelle zur Wiedervorgabe der Gesprächszeit solange die Schleife in der Abfragestelle geschlossen ist;
N) Auslösung der Schleife bei Gesprächsende an der Abfragestelle;
O) Abgabe eines NF-Auslösesignals von der Abfragestelle zur Notrufsprechstelle;
P) Auslösung der Schleife an der Notrufsprechstelle;
Q) Abschalten des Sprechweges und Rückschalten der Notrufsprechstelle in den Ruhezustand.

2. Einrichtung zur Durchführung des Verfahrens nach Anspruch 1 bei einem Hilferufsystem, in dem eine als Freisprecheinrichtung ausgebildete Notrufsprechstelle über das öffentliche Fernsprechnetz mit einer Abfragestelle verbindbar ist, wobei der Notrufsprechstelle der zum Betrieb der Hör-, Sprech- und Steuervorrichtungen erforderliche Gleichstrom über die Signalleitung zugeführt wird und die Notrufsprechstelle mittels einer Ruftaste aus einem Ruhezustand, indem ein konstanter Gleichstrom vorgegebener Größe über die Signalleitung fließt, in einen Betriebszustand mit höherem Gleichstromfluß schaltbar und durch eine Unterbrechung der Speisespannung auf der Signalleitung in den Ruhezustand zurückschaltbar ist, dadurch gekennzeichnet, daß die Notrufsprechstelle (NSS) über ein Sprechstelleninterface (SI) mit einem üblichen Teilnehmeranschluß einer Fernsprecheinrichtung verbunden und die Abfragestelle (AS) über ein Abfrageinterface (AI) an die Fernsprechleitung (FL2) angeschlossen ist und im Sprechstelleninterface eine programmierbare elektronische Steuerschaltung (ST1) angeordnet ist zur automatischen Steuerung der Einrichtungen des Sprechstelleninterfaces (SI), das mindestens folgende Einrichtungsteile aufweist:
a) Eine Speisespannungszuführungsschaltung (1, 2) für die Notrufsprechstelle;
b) eine Schleifenstromerkennungsschaltung (3);
c) eine bei einer vorgegebenen Schleifenstromerhöhung einschaltbare Ansagevorrichtung (4);
d) eine Schaltung (5) zur Erkennung des Wähltons und des Freitons auf der Fernsprechleitung (FL1);
e) eine Vorrichtung (nsi, nsa,6) zur Abgabe von Wählsignalen;
f) eine Vorrichtung (7) zur Abgabe von Kennungssignalen und zur Erkennung und Verarbeitung von über die Fernsprechleitung (FL1) ankommenden Kennungsanforderungssignalen und Gesprächseröffnungssignalen;
g) eine Durchschaltvorrichtung (V-vI, vII, Gu-guI, guII) für den Sprechweg nach Erkennung eines Gesprächseröffnungssignals;
h) ein Zeitglied (8), das nach einem vorgegebenen Zeitraum eine Schleifenauslösung bewirkt;
i) eine Schaltung (9-7) zur Erkennung und Verarbeitung eines über die Fernsprechleitung (FL1) ankommenden NF-Rücksetzsignals für das Zeitglied (8);
j) eine Schaltung (9-7) zur Erkennung und Verarbeitung eines über die Fernsprechleitung (FL1) ankommenden NF-Auslösesignals;
während im Abfrageinterface (AI) eine programmierbare elektronische Steuerschaltung (ST2) angeordnet ist zur automatischen Steuerung der Einrichtungen des Abfrageinterfaces, das mindestens folgende Einrichtungsteile aufweist:
k) eine Speisespannungszuführungsschaltung (K4-k4I, k4II) für die Abfragestelle (AS);
l) eine Schleifenstromerkennungsschaltung (10.1, 10.2);
m) eine Schaltung (11) zur Erkennung des Ruftons;
n) eine Schaltung (12) zur Abgabe von Kennungsanforderungssignalen und Eröffnungssignalen sowie zur Erkennung und Verarbeitung von Kennungssignalen;
o) eine Schaltung (K4-k4I, k4II) zur Erzeugung eines Rufsignals für die Abfragestelle (AS);
p) eine Durchschaltvorrichtung (K2) für den Sprechweg nach Erkennung eines Kennungssignals;
q) ein Zeitglied (13), das nach einem vorgegebenen Zeitraum eine Schleifenauslösung bewirkt mit einer bei geschlossener Schleife wirksamen automatischen Rücksetzeinrichtung;
r) eine Schaltung (12) zur Abgabe eines NF-Rücksetzsignals auf die Fernsprechleitung (FL2) bei geschlossener Schleife in vorgegebenen Zeitabständen;
s) eine Schaltung (12) zur Abgabe eines NF-Auslösesignals auf die Fernsprechleitung (FL2) beim Auslösen der Schleife von der Abfragestelle (AS) aus.

3. Hilferufsystem nach Anspruch 2, dadurch gekennzeichnet, daß im Abfrageinterface (AI) eine Überbrückungsschaltung (K1-k1I/II-k1III/IV) zur direkten Verbindung der Abfragestelle (AS) mit der Fernsprechleitung (FL2) beim Ausbleiben von Kennungssignalen angeordnet ist.

4. Hilferufsystem nach Anspruch 2 oder 3, dadurch gekennzeichnet, daß im Abfrageinterface (AI) eine Vorrichtung (14) zur Abgabe eines Tonsignals an die Abfragestelle (AS) bei Schleifenschluß ohne Vorliegen eines Ruftones angeordnet ist.

5. Hilferufsystem nach einem der Ansprüche 2 bis 4, dadurch gekennzeichnet, daß im Sprechstelleninterface (SI) ein Rufnummernspeicher angeordnet ist zur Rufnummernauswahl nach Durchführung einer vorgegebenen Anzahl von Wählversuchen ohne Freitonerkennung.

6. Hilferufsystem nach einem der Ansprüche 2 bis 5, dadurch gekennzeichnet, daß im Sprechstelleninterface (SI) eine Trennschaltung (V-vI/II) zur Abtrennung der Notrufsprechstelle (NSS) vom Sprechstelleninterface (SI) während der Erkennung und Verarbeitung eines NF-Rücksetzsignals angeordnet ist.

7. Hilferufsystem nach einem der Ansprüche 2 bis 6, dadurch gekennzeichnet, daß im Abfrageinterface (AI) eine Trennschaltung (K3-k3I/II) zur Abtrennung der Abfragestelle (AS) von der Fernsprechleitung (FL2) während der Abgabe und Verarbeitung des NF-Rücksetzsignals angeordnet ist.

8. Hilferufsystem nach einem der Ansprüche 2 bis 7, dadurch gekennzeichnet, daß im Abfrageinterface (AI) eine Trennschaltung (K3-k3I/II) zur Abtrennung der Abfragestelle (AS) von der Fernsprechleitung (FL2) während der Abgabe des NF-Auslösesignals angeordnet ist.

9. Hilferufsystem nach Anspruch 7 oder 8, dadurch gekennzeichnet, daß im Abfrageinterface eine Vorrichtung (14) zur Abgabe eines Tonsignals an die Abfragestelle (AS) während der Abgabe und Verarbeitung des NF-Rücksetzsignals und/oder des NF-Auslösesignals angeordnet ist.

10. Hilferufsystem nach einem der Ansprüche 2 bis 9, dadurch gekennzeichnet, daß im Sprechstelleninterface (SI) eine Schaltung (2) zur Abschaltung der Speisespannung der Notrufsprechstelle (NSS) für einen vorgegebenen Zeitraum angeordnet ist.

11. Hilferufsystem nach einem der Ansprüche 2 bis 10, dadurch gekennzeichnet, daß die Schleifenstromerkennungsschaltung im Abfrageinterface (AI) aus zwei Schaltungsteilen (10.1, 10.2) aufgebaut ist und beim Vorliegen eines Rufsignals die Abfragestelle (AS) im Takt des Rufsignals wechselweise über einen Schaltungsteil (10.2) mit der Schaltung zur Erzeugung des Rufsignals oder über den anderen Schaltungsteil (10.1) mit der Speisespannungszuführung verbunden ist.

12. Hilferufsystem nach einem der Ansprüche 2 bis 11, dadurch gekennzeichnet, daß vom Sprechstelleninterface (SI) aus die Aktivierung eines Prüfvorgangs an der Notrufsprechstelle durch Aus- und Wiedereinschalten der Speisespannung bewirkbar ist, wobei von der Notrufsprechstelle ein Prüfton abgegeben wird und im Spechstelleninterface (SI) eine Vorrichtung (5) zur Erkennung des Prüftons, zur Abgabe eines Quittungssignals, welches den Prüfvorgang beendet, an die Steuerschaltung und zur Erzeugung einer Störungsanzeige beim Ausbleiben des Quittungssignals angeordnet ist.

13. Hilferufsystem nach Anspruch 12, dadurch gekennzeichnet, daß von einem PC mit Wählmodem aus über das öffentliche Fernsprechnetz die Aktivierung eines Prüfvorganges an der Notrufsprechstelle durch Abgabe des Ruftones von der Vermittelungsstelle (VM) an das Sprechstelleninterface (SI) bewirkbar ist, wobei im Sprechstelleninterface eine Vorrichtung (15) zur Erkennung des Ruftones angeordnet ist, durch welche über die Steuerschaltung (SP1) die Abgabe des Prüftons von der Notrufsprechstelle (NSS) eingeleitet wird.

14. Hilferufsystem nach einem der Ansprüche 2 bis 13, dadurch gekennzeichnet, daß im Sprechstelleninterface (SI) eine Leitungsnachbildung (16) angeordnet ist, an welche die Notrufsprechstelle (NSS) im nicht auf die Fernsprechleitung (FL1) durchgeschalteten Zustand angeschlossen ist.

15. Hilferufsystem nach einem der Ansprüche 2 bis 14, dadurch gekennzeichnet, daß das Sprechstelleninterface (SI) eine Schnittstelle (17) aufweist, über welche es an eine Vorrichtung zur Abfrage von Daten sowie zur Programmierung und Initialisierung anschließbar ist.

16. Hilferufsystem nach einem der Ansprüche 2 bis 15, dadurch gekennzeichnet, daß das Abfrageinterface (AI) eine Schnittstelle (18) aufweist, über welche es an einen mit Kennungsanzeigevorrichtungen verbundenen Anzeigetreiber anschließbar ist.
